# EUROPEAN PATENT APPLICATION

(11) **EP 3 439 313 A1**
(43) Date of publication of application: **06.02.2019**
(21) Application number: 17188533.8
(22) Date of filing: 30.08.2017
(51) Int. Cl.: H04N 21/61, H04N 21/658, H04N 21/422, G01W 1/00

(54) **DISTRIBUTED ENVIRONMENT MONITORING STATION INTERFACING WITH SATELLITE TV AND BROADBAND INTERNET**

(30) Priority: 04.08.2017 US 201715669596
(71) Applicant: STMicroelectronics International N.V., 1118 BH Schiphol (NL); STMicroelectronics Pvt. Ltd., 201308 Greater Noida, Uttar Pradesh (IN)
(72) Inventor: DASGUPTA, Nabarun, 110096 New Delhi (IN); CHATTERJEE, Subrata, 723144 West Bengal (IN); SINGH, Hemendra, 201308 Greater Noida (IN); PATHAK, Amit Kumar, 201010 Ghaziabad (IN)
(74) Representative: Smith, Gary John

(57) **Abstract**

Disclosed herein is a system (e.g. satellite TV, satellite broadband) including a communications connection, with a set top box (58) coupled to the communications connection. A control unit (70) for a receiver (52) is coupled to the communications connection. At least one environmental sensor (51 a, 51b) is configured to generate environmental data about a local environment in which the at least one environmental sensor is located, and to send the environmental data to the control unit (70). The control unit (70) is configured to transmit the environmental data to the set top box over the communications connection. The set top box (58) is configured to process the environmental data. The set top box (58) may send the environmental data to a server f(62) or weather prediction, use in a community weather portal, etc.

## Description

### TECHNICAL FIELD

This disclosure is related to the field of television broadcast reception systems as well as satellite broadband systems, and more particularly, to the colocation of environmental sensors with components of such television broadcast reception systems and satellite broadband systems located externally, and in some cases internally, to residences that they serve.

### BACKGROUND

Television programming receivers, such as satellite television receivers, have grown in functionality and complexity in recent times. While in the past such receivers have merely been capable of displaying a single channel of television programming on a television at a given time, today such receivers may display a variety of information other than television programming. For example, television programming receivers, satellite broadband receivers, and communication receivers may now display program guides, interactive menus, informative displays, and the like.

Where an informative display is shown, the information contained therein is received together with the television programming. Stated another way, this information is received from a central location, and is intended to apply for receivers in a given geographic area. While this is useful, for certain kinds of information that can vary over a given geographical area, this may result in the display of inaccurate or unhelpful information, rendering said informative display not so informative or accurate. For example, this information may be environmental information, which when inaccurate, is not only unhelpful, but may actually be harmful.

Consequently, further development in the capability of television programming receivers to collect and display information other than transmitted multimedia programs or information data is needed.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

Disclosed herein is a system including a communications connection, with an integrated receiver decoder (e.g. set top box) coupled to the communications connection. A control unit for a receiver is coupled to the communications connection. At least one environmental sensor is configured to generate environmental data about a local environment in which that environmental sensor is located, and to send the environmental data to the control unit. The control unit is configured to transmit the environmental data to the set top box over the communications connection. The set top box is configured to send relevant queries on the environmental data and to process the environmental data.

The communications connection may be a coaxial connection, the receiver may be a satellite TV dish and associated circuitry, the set top box may be a satellite TV set top box, and the control unit may transmit the environmental data over the coaxial connection using a protocol designed for communications in a satellite TV system. The protocol may be for Digital Satellite Equipment Control (DiSEqC™, hereinafter referred to as DiSEqC), or in some cases protocols employing frequency shift keying (FSK). Additional and appropriate DiSEqC commands can be added for transmission of environmental data to DiSEqC or other alternative protocols/standards., The set top box may receive video data directly from a low noise block (LNB) for the satellite TV dish. The received RF Signal is down-converted and amplified by the LNB and this signal may be routed directly or via additional satellite peripheral equipment (e.g. SMATV) that performs additional processing. A MCU employed in the control unit may have an additional role in the performance of the additional processing by the satellite peripheral equipment.

The set top box may process the environmental data and convert it to environmental video data and generate a video signal for display including television video programming having the environmental video data at least partially superimposed thereupon. The set top box may also store the environmental data for later use, such as generating and displaying of a trend in the environmental data.

The set top box may be connected for Internet data communications and/or satellite television, and the set top box may process the environmental data by transmitting the environmental data about the local environment in which at least one environmental sensor is located over the Internet to a server. In some cases, the set top box may perform other processing of the environmental data and may instead not send that data to the server. In the case of a two way satellite communication system (e.g. a satellite broadband system), the connectivity with the server may be via an outdoor unit and the control unit.

The at least one environmental sensor may be selected from the group including a temperature sensor, a humidity sensor, an ultraviolet sensor, noise level sensor, precipitation sensor, seismic sensor, a wind sensor, a pressure sensor, and a pollution sensor. Other usable sensors may include any type of gas or air sensors, such as oxygen sensors, carbon dioxide sensors, carbon monoxide sensors, or particulate sensors.

The at least one environmental sensor may be a plurality of environmental sensors, with each of the plurality of environmental sensors being one of a temperature sensor, a humidity sensor, an ultraviolet sensor, noise level sensor, precipitation sensor, seismic sensor, a wind sensor, a pressure sensor, and a pollution sensor.

The communications connection may be a coaxial connection, the receiver may be a satellite TV dish which gathers and reflects radiowaves to a feedhorn connected to a low-noise block downconverter (LNB) configured to receive satellite TV video programming signals from a satellite TV dish, downconvert the received satellite TV video programming signals for use as television video programming signals, and send the television video programming signals to the set top box. The LNB may be carried within a housing, and the at least one environmental sensor may be disposed within the housing. In some cases, the LNB and the at least one environmental sensor may be integrated on a same printed circuit board.

The system may include a satellite TV dish having at least one physical control associated therewith, and the control unit may be configured to actuate the at least one physical control based upon the environmental data from the at least one environmental sensor. The at least one physical control may be a heater for the satellite TV dish. The at least one physical control may be to switch the LNB on or off. These physical controls may also be activated in response to an appropriate command from the indoor unit / set top box.

The set top box may process the environmental data to determine at least one of an effective temperature, a dew point, and a wind chill factor. The at least one environmental sensor may receive power via the communications connection.

The control unit may include receiver circuitry configured to receive queries on the environmental data (from the set top box) over the communications connection, a microprocessor configured to gather and pre-process the environmental data, a digital to analog converter configured to convert the pre-processed environmental data to modulated message data, and a transmitter configured to transmit the modulated message data over the communications connection to the set top box bit by bit along with a parity bit, such as by using a DiSEqC or other applicable standard.

Another aspect is directed to a distributed system with a plurality of satellite television systems. Each of the plurality of satellite television systems includes a coaxial connection, a set top box coupled to the coaxial connection, a control unit for a satellite dish coupled to the coaxial connection, and an environmental sensor configured to generate environmental data about a local environment in which the environmental sensor is located, and to send the environmental data to the control unit. The control unit is configured to transmit the environmental data to the set top box over the coaxial connection. At least one of the set top box and the control unit may be configured to process the environmental data and transmit the environmental data to a wide area network. A server may be configured to receive the environmental data from each of the plurality of satellite television systems over the wide area network, and generate weather data about a region as a function of the environmental data from each of the respective local environments in which the environmental sensors of the plurality of satellite television systems or satellite broadband systems are located.

The weather data about the region may include a map of weather conditions across the region. The server may be configured to select advertisements for the region as a function of the weather data about the region. The server may be configured to select programming for the region as a function of the weather data about the region. The environmental sensor may be one of a temperature sensor, a humidity sensor, an ultraviolet sensor, a wind sensor, pressure sensor, and a pollution sensor. In some cases, the environmental sensor may be a plurality of environmental sensors, with each of the plurality of environmental sensors being one of a temperature sensor, a humidity sensor, an ultraviolet sensor, a wind sensor, a pressure sensor, and a pollution sensor.

An aspect is directed to a system, comprising: a communications connection; a set top box coupled to the communications connection; a control unit for a receiver coupled to the communications connection; at least one environmental sensor configured to generate environmental data about a local environment in which the at least one environmental sensor is located, and to send the environmental data to the control unit; wherein the control unit is configured to transmit the environmental data to the set top box over the communications connection; wherein the set top box is configured to process the environmental data.

The communications connection may be a coaxial connection; the receiver may be a satellite broadband dish; the set top box may be a satellite broadband box; and the control unit may transmit the environmental data over the coaxial connection using a protocol designed for communications in a satellite broadband system.

The communications connection may be a coaxial connection; the receiver may be a satellite TV dish; the set top box may be a satellite TV set top box; and the control unit may transmit the environmental data over the coaxial connection using a protocol designed for communications in a satellite TV system.

The protocol may be Digital Satellite Equipment Control (DiSEqC).

The communications connection may be a coaxial connection; the receiver may be a satellite TV dish; the set top box may be a satellite TV set top box; and the control unit may transmit the environmental data over the coaxial connection using a protocol designed for communications in a TV system; and the protocol may employ frequency shift keying (FSK).

The set top box may process the environmental data by converting the environmental data to environmental video data and generating a video signal including television video programming having the environmental video data at least partially superimposed thereupon.

The set top box further may process the environmental data by storing the environmental data for determining trends.

The set top box may be connected for Internet data communications; and the set top box may process the environmental data by transmitting the environmental data about the local environment in which the at least one environmental sensor is located over the Internet to a server.

The at least one environmental sensor may be selected from the group consisting of a temperature sensor, a humidity sensor, an ultraviolet sensor, noise level sensor, precipitation sensor, seismic sensor, a wind sensor, a pressure sensor, and a pollution sensor.

The at least one environmental sensor may comprise a plurality of environmental sensors, with each of the plurality of environmental sensors comprising one of a temperature sensor, a humidity sensor, an ultraviolet sensor, noise level sensor, precipitation sensor, seismic sensor, a wind sensor, a pressure sensor, and a pollution sensor.

The communications connection may be a coaxial connection; the receiver may be a satellite TV dish; further comprising a low-noise block downconverter (LNB) configured to receive satellite TV video programming signals from a satellite TV dish, downconvert the received satellite TV video programming signals for use as television video programming signals, and send the television video programming signals to the set top box; the LNB may be carried within a housing; and the at least one environmental sensor may be disposed within the housing.

The LNB and the at least one environmental sensor may be integrated on a same printed circuit board.

The LNB and the at least one environmental sensor may be integrated on different printed circuit boards.

The LNB and the at least one environmental sensor may be collocated in a single housing.

The at least one environmental sensor may be mounted to a housing of the control unit.

The system may comprise a satellite TV dish having at least one physical control associated therewith; and the control unit may be configured to actuate the at least one physical control based upon the environmental data from the at least one environmental sensor or in response to a command received from the set top box.

The at least one physical control may be a heater for the satellite TV dish.

The set top box may process the environmental data to determine at least one of an effective temperature, a dew point, and a wind chill factor.

The at least one environmental sensor and/or an associated control circuit may receive power via the communications connection.

The control unit may comprises: receiver circuitry configured to receive queries about or commands based upon the environmental data over the communications connection; a microprocessor interfaced with the at least one environmental sensor and configured to gather and pre-process the environmental data; a digital to analog converter configured to convert the pre-processed environmental data to modulated environmental data in a specified format, and to generate modulated environmental data encoded from the pre-processed digital environmental data in a specified format; and a transmitter configured to transmit the modulated environmental data over the communications connection to the set top box.

Another aspect is direct to a system, comprising: a plurality of satellite systems, each of the plurality of satellite systems comprising: a coaxial connection, an indoor box coupled to the coaxial connection, a control unit for a satellite dish coupled to the coaxial connection, an environmental sensor configured to generate environmental data about a local environment in which the environmental sensor is located, and to send the environmental data to the control unit, wherein the control unit is configured to transmit the environmental data to the indoor box over the coaxial connection; wherein at least one of the indoor box and the control unit is configured to process the environmental data and transmit the environmental data to a wide area network; a server configured to: receive the environmental data from each of the plurality of satellite systems over the wide area network; generate weather data about a region as a function of the environmental data from each of the respective local environments in which the environmental sensors of the plurality of satellite systems are located.

The weather data about the region may comprise a map of weather conditions across the region.

The server may be configured to select advertisements for the region as a function of the weather data about the region.

The the server may be configured to select programming for the region as a function of the weather data about the region.

The server may be configured to notify a governmental entity as a function of the weather data about the region.

The server may be configured to define a community or private satellite TV / broadband operator weather portal for precise weather prediction for the region.

The environmental sensor may comprise one of a temperature sensor, a humidity sensor, an ultraviolet sensor, noise level sensor, precipitation sensor, seismic sensor, a wind sensor, pressure sensor, and a pollution sensor.

The environmental sensor may comprise a plurality of environmental sensors, with each of the plurality of environmental sensors comprising one of a temperature sensor, a humidity sensor, an ultraviolet sensor, a wind sensor, a pressure sensor, and a pollution sensor.

The plurality of satellite systems may be a plurality of satellite broadband systems.

The plurality of satellite systems may be a plurality of satellite TV systems.

The plurality of satellite systems may be a mix of satellite TV systems and satellite broadband systems.

The environmental sensors of different ones of the plurality of satellite systems may be different types of sensors.

The server may be configured to compare the environmental data from at least some of the plurality of satellite systems to determine malfunction of the environmental sensor of at least one of the plurality of satellite systems, and to send an error message and/or correct environmental data to that at one of the plurality of satellite systems.

The control unit may transmit the environmental data to the wide area network via a satellite return channel.

### BRIEF DESCRIPTION OF THE DRAWINGS

FIG. 1 is a block diagram of a satellite TV system in accordance with this disclosure.
FIG. 2 is a sample display of a television operating using the satellite TV system of FIG. 1.
FIG 3 is block diagram of a typical control unit pertaining to weather station functionality associated with the satellite TV of FIG.1.
FIG. 4 is a schematic diagram of the DiSEqC transmitter and receiver of the control unit of FIG. 3.
FIG. 5 is a schematic diagram of the transmitter circuitry 110 of the DiSEqC transmitter and receiver of FIG. 4.
FIG. 6 is a block diagram of a distributed environment monitoring system including multiple satellite TV systems such as that of FIG. 1.

### DETAILED DESCRIPTION

One or more embodiments of the present disclosure will be described below. These described embodiments are only examples of the presently disclosed techniques. Additionally, in an effort to provide a concise description, some features of an actual implementation may not be described in the specification. When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements.

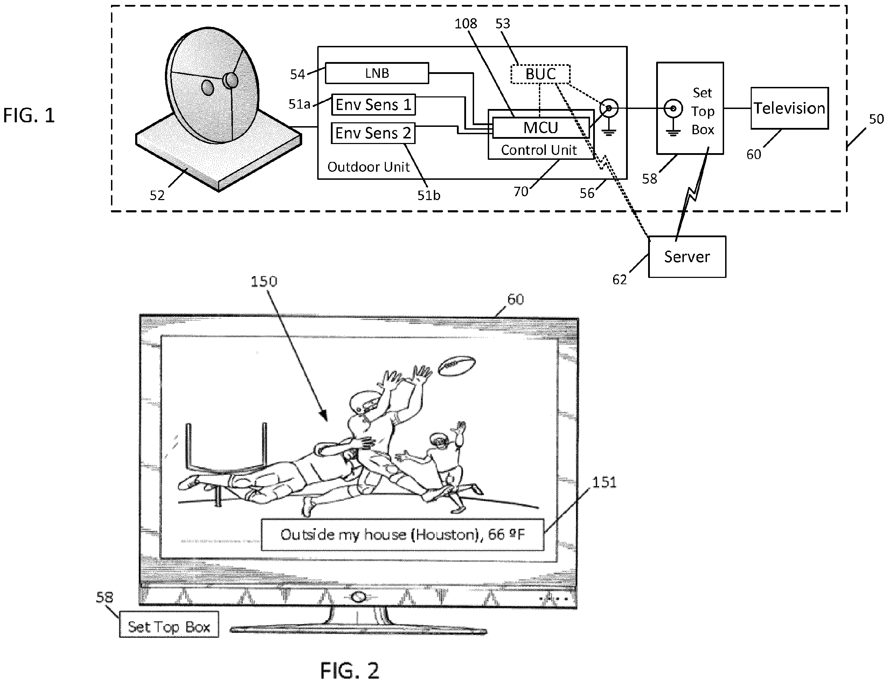

With initial reference to FIG. 1, a satellite TV and two-way internet system 50 is now described. The satellite TV system 50 includes a satellite dish 52 and an associated outdoor unit 56. The outdoor unit 56 includes a low-noise block downconverter (LNB) 54. The LNB 54 receives data (which can be satellite video data signals containing compressed video, audio, etc) comprised of a block of frequencies collected by the satellite dish 52, amplifies it, and downconverts the block of frequencies to a lower block of intermediate frequencies (IF).

The outdoor unit 56 also includes environmental sensors 51a-51b, for example, a temperature sensor, a humidity sensor, an ultraviolet sensor, a wind sensor, an air pressure sensor, a precipitation sensor, a pollution sensor, or other suitable sensors. The environmental sensors 51 a-51b may in some cases be located on a same printed circuit board (PCB) as the LNB 54, or in some cases may not be on the same PCB as the LNB 54, but may instead be collocated in the housing of the outdoor unit 56. In still other cases, the environmental sensors 51a-51b may not be on the same PCB as the LNB 54, but may instead be mounted to the housing of the outdoor unit 56, in the housing of the LNB 54, or mounted to/near the satellite dish 52. In some cases, additional sensors may be coupled to the coaxial connection 100. For example, these additional sensors may be indoor sensors for monitoring indoor environmental conditions. Although two environmental sensors 51a-51b have been shown, it should be understood that there may be any number of environmental sensors 51a-51b.

A control unit 70 containing at least one MCU 108 and additional circuit components is employed to implement signal conditioning, processing, interfacing and communication for the environment monitoring system and the outdoor unit. Additional circuit components employed also depend on the type of sensors and control scheme of the system. Multiple control units may be used if sensors are used at multiple places along the Satellite TV system and Coaxial cables.

A block upconverter (BUC) 53 is optionally placed in the outdoor unit 56 coupled with coaxial connection 100 and may be used by the MCU 108 together with the indoor unit/set top box 58 to encode, modulate at a higher frequency and amplify in order to reflect the return channel (uplink) data off the dish 52 towards the satellite. The BUC 53 usually includes circuitry to decode data form the set top box 58 sent over the coaxial cable 100. Part of the data is intended for transmission over the return channel.

The environmental sensors 51a-51b typically receive power over the coaxial connection 100, although in some cases may have a different power connection. The environmental sensors 51a-51b serve to generate environmental data about their local environment, which they pass to microcontroller (MCU) 108 via an analog or digital interface, such as I2C or SPI. The LNB 54 typically passes the downconverted satellite data signals (e.g. video signals) to set top box 58 via the coaxial connection 100, which in turn serves to demodulate the downconverted video data signals for display by a television 60 or for storage in memory of the set top box 58 or receiver. Typically the connection between the LNB 54 and MCU 108 is used for controlling the LNB 54 via the MCU 108. The environment monitoring system added to the outdoor unit 56 also sends the environmental data to the indoor unit (e.g. set top box 58) via the coaxial connection 100 using the Digital Satellite Equipment Control (DiSEqC) protocol, or a similar or equivalent protocol.

The set top box 58 processes the environmental data, and converts the environmental data to environmental video data. The set top box 58 then generates a video signal for display on the television 60. This video signal includes the video data signals (television programming) with the environmental video data superimposed thereon. An example of this is shown in FIG. 2, where the set top box 58 is displaying an American football game television program 150 on the television 60, with the environmental video data 151 (here, the current temperature in the area of Houston where the satellite TV system 50 is located) superimposed thereon. It should be appreciated that the set top box 58, or a remote control associated with the set top box 58, may include a user interface used to control or format the display of the environmental video data.

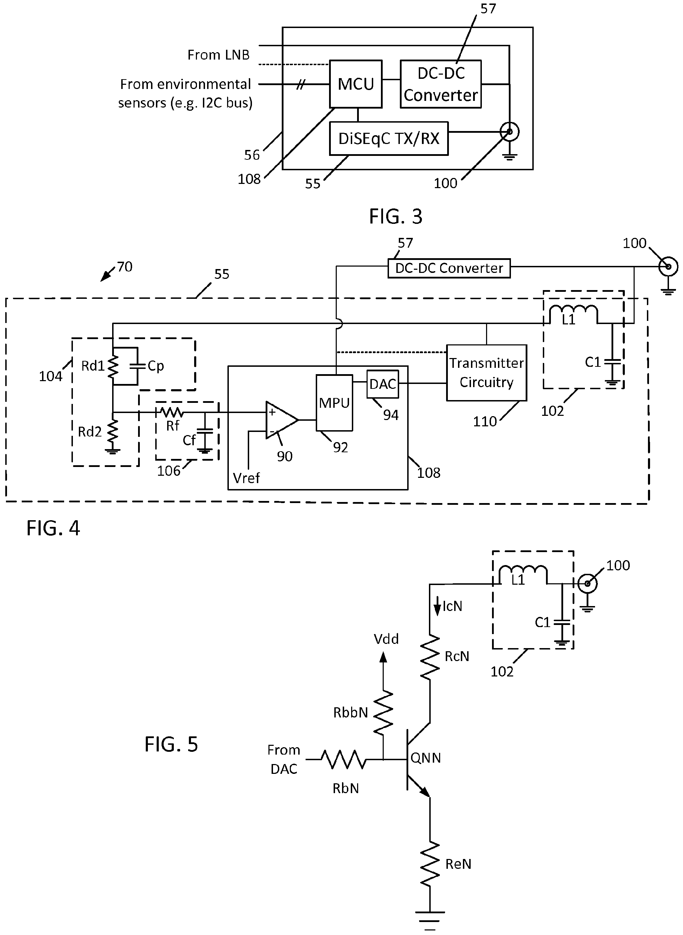

With further reference to FIG. 3, details of the control unit 70 are now given. The control unit 70 includes a DC/DC converter 57 that receives a power signal over the coaxial connection 100, and converts the received power signal (which may be approximately 13V or 18V, depending on a desired polarization for the satellite dish 52 and LNB 54, or a fixed voltage such as 12V) for use by control unit 70 and environmental sensors 51a-51b. A Digital Satellite Equipment Control (DiSEqC) transceiver 55 functions in conjunction with the MCU 108 to permit the MCU 108 to receive commands, responses, or queries over the coaxial connection 100 transmitted using the DiSEqC standard, such as from the set top box 58, and to permit the MCU 108 to transmit commands, queries, or responses over the coaxial connection 100, such as to the LNB 54 or set top box 58. As explained, the control unit 70 sends the environmental data to the set top box 58, using the DiSEqC protocol, over the coaxial connection 100.

While prior DiSEqC transceiver designs are usable here and would permit such bidirectional communication, drawbacks persist. For example, DiSEqC signals transmitted by a prior transceiver may take the form of a trapezoidal or truncated triangular wave, making detection by the outdoor unit 56 or set top box 58 more difficult, and consuming an undesirable amount of power or generating more noise. Therefore, as will now be explained with reference to FIG. 4, the DiSEqC transceiver 55 used in the outdoor unit 56 is of a novel design that addresses this drawback, and serves to generate sinusoidal waves which reduce noise generation, and therefore, the subsequent use of filtration for that noise. In addition, this transceiver 55 design is generic and can be used to generate modulated data for various protocols and schemes (e.g. DiSEqC, FSK, etc) with appropriate adaption of firmware in the MCU 108.

With reference to FIG. 4, the DiSEqC transceiver 55 is now described. The transceiver 55 includes a filter 102 to filter incoming and outgoing signals to the coaxial connection 100. The filter 102 is comprised of an inductor L1 coupled in line along the coaxial connection 100 and a capacitor C1 coupled between the coaxial connection 100 and ground. Since the transceiver 55 is capable of shaping signal waves close to sinusoidal wave, the values of L1 and C1 may be relatively small compared to prior art trapezoidal signal generators. The DiSEqC signals transmit data using a chopped 22 kHz wave. This 22 KHz Sinusoidal wave rides on 13/18V supplied by the coaxial connection 100.

The potential divider cum conditioner circuit 104 includes a parallel coupled resistor Rd1 and capacitor Cp in series with resistor Rd2. In addition resistors Rd1 and Rd2 act as a potential divider to scale down the signal, however capacitor Cp provides a lower impedance path for the 22 kHz signal and is thus attenuated to a lesser degree by this divider. A low pass filter 106 receives the compensated DiSEqC signals from the conditioner circuit 104 and filters out higher frequencies other than 22 kHz DiSEqC signals. The low pass filter 106 includes an in-line resistor Rf coupled to a non-inverting terminal of amplifier 90, as well as a capacitor Cf coupled between the inverting terminal of amplifier 90 and ground. Filter Rf and Cf help to eliminate high frequency noise to increase reliability

The output of amplifier 90, used here as a comparator, is a digital replica of the 22 kHz sinusoidal signal and is fed to microprocessor 92. Microprocessor 92 reads this digital replica of the DiSEqC signal, which here could be a query from the set top box 58 related to the environmental data. The MCU 108 may ignore the signal it receives while it is transmitting a DiSEqC signal. Microprocessor 92 reads the environmental data from various sensors, optionally pre-processes the environmental data, and then passes the environmental data (whether pre-processed or not) in a predefined format to the DAC 94 as a response to commands, which serves to format the environmental data for transmission by the transmitter circuitry 110 and subsequent transmission over the coaxial connection 100.

In some cases, the pre-processing of the environmental data may be required to determine the temperature of the environment in which the satellite dish 52 is exposed. If this temperature is below a threshold temperature, the microprocessor 92 may then, instead of or in addition to passing the environmental data to the set top box 58, generate a command/control signal to be sent to the satellite dish 52, with such command/control signal serving to activate a heater associated with the satellite dish 52 with the purpose of melting snow or ice on the satellite dish 52, or to prevent the buildup of snow or ice on the satellite dish 52. The set top box 58 may also send a command to the control unit 108 for activating the heater.

With additional reference to FIG. 5, details of the transmitter circuitry 110 are now given. The transmitter circuitry 110 includes NPN bipolar junction transistor QNN (although it could also be a PNP or MOS transistor) having a collector coupled to the filter 102 through power dissipating resistor RcN that together with the transistor and biasing resistor serves to absorb a desired amount of power to cause sinusoidal voltage drop in the coaxial connection 100, and an emitter coupled to ground through bias resistor ReN. Resistor RbN is coupled in line with the base of transistor QNN and serves to decouple the received DiSEqC signal In from DAC 94, and a bias resistor RbbN is coupled between the base of transistor QNN and a supply node Vdd (supply for MCU 108 derived from DC-DC converter 57).

It should be understood that under control of the DAC 94, the output signal generated by transistor QNN may be shaped to be generally sinusoidal, or have multiple steps, rather than the trapezoidal output signal produced by prior art DiSEqC transceivers. In addition, under control of the DAC 94, the transmitter 110 is generic and can be used to generate modulated data for various protocols and schemes (e.g. FSK) with appropriate adaptions and adjustments made in firmware of the MCU 108.

Referring again to FIG. 1, the set top box 58 may process the environmental data in a variety of ways. For example, the set top box 58 may process the environmental data to determine an effective temperature (i.e. what temperature is perceived by a human being in the environment, not what actual temperature would be read by a thermometer), and/or a dew point, and/or a wind chill factor (which can be a contributing factor to the wind effective temperature being lower than the actual temperature). This may also be performed to compensate for the effect of direct irradiation of bright sunlight, or light from a reflective surface.

The set top box 58 may transmit the environmental data over a wide area network, such as the Internet, to a server 62 via a block upconverter 53 that formats the data for transmission, or via a LAN or WLAN connection. The server 62 in turn may provide input for advertisement selection, and alter which advertisements, news segments, or other programmes are sent to the satellite dish 52 for the geographical area in which the satellite TV system 50 is located.

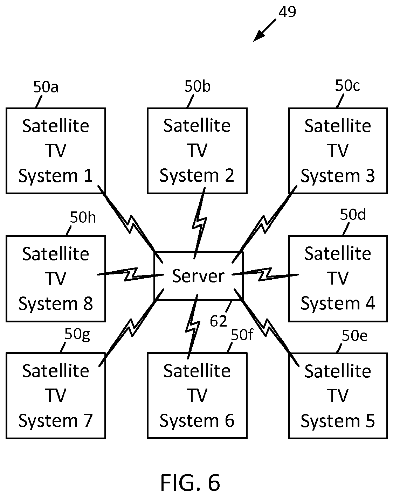

Referring now to FIG. 6, it should be appreciated that the satellite TV system 50 described above may be but one such system in a distributed environment, and that there may be many such satellite TV systems 50a-50h in a satellite network or region 49, each having the structure, function, and components of the satellite TV system 50 described above, that send their environmental data to the server 62. The server 62 can generate weather data about a given region as a function of the environmental data from each of the respective local environments in which the satellite TV systems 50a-50h are located. For example, each satellite TV system 50a-50h may be in a different neighborhood of a given city, and the server 62 can then generate weather data about said city from the environmental data received from those satellite TV systems 50a-50h. This generated weather data of the given region may be, for example, a map of weather conditions across the given region. This can provide for a more precise and accurate weather map than current systems, as many more points of data are used.

Another aspect of the distributed system that may be where multiple of the units 50a-50h may not be identical. For example, a residential complex may have common pollution senor, thus enabling sharing of costlier sensor. In addition, it would be possible to have complementary sensors compared to neighboring units, e.g. where one system 50a has a pollution sensor, and a neighboring system 50b has a pressure sensor. It would be possible to detect a malfunction or error of a sensor, as data from neighboring unit may be available. In such a case, an appropriate error message or correct data may be provided.

The server 62 may also function to select advertisements or programmes for the given region based upon the generated weather data. The server 62 may provide the generated weather data, or the raw environmental data collected by the satellite TV systems 50a-50h to another server or data for policy makers, such as a municipal or governmental server for use in making policy decisions.

The server 62 may in some cases be a community weather portal accessible by Internet enabled devices, or may be maintained by the satellite TV provider which installed and maintains the satellite TV systems 50a-50h. Still further, the set top box 58 may actually send the environmental data to multiple different servers, and need not send to but one server 62.

Referring against to FIG. 1, in some applications, outdoor unit 56, or environmental sensors 51a-51b themselves may include a battery and memory such that the generated environmental data may be stored while the set top box 58 is turned off.

It should be understood that although the outdoor unit 56 has been described as using the DiSEqC protocol, it may use any suitable protocol for communications within such systems. For example, the outdoor unit 56 may additionally or alternatively use frequency shift keying (FSK) for communicating the environmental data and commands.

In addition, in some cases, the satellite dish 52 may instead be a terrestrial antenna to receive terrestrial television broadcasts. In that case, the environmental sensors 51a-51b may instead be collocated with, adjacent to, or mounted on the terrestrial antenna.

While the disclosure has been described with respect to a limited number of embodiments, those skilled in the art, having benefit of this disclosure, will appreciate that other embodiments can be envisioned that do not depart from the scope of the disclosure as disclosed herein. Accordingly, the scope of the disclosure shall be limited only by the attached claims.

## Claims

1. A system (50), comprising:
a communications connection (100);
a set top box (58) coupled to the communications connection (100);
a control unit (70) for a receiver (52) coupled to the communications connection (100);
at least one environmental sensor (51a, 51b) configured to generate environmental data about a local environment in which the at least one environmental sensor (51a, 51 b) is located, and to send the environmental data to the control unit (70);
wherein the control unit (70) is configured to transmit the environmental data to the set top box (58) over the communications connection (100);
wherein the set top box (58) is configured to process the environmental data.

2. The system (50) of claim 1, wherein the communications connection (100) is a coaxial connection; wherein the receiver (52) is a satellite broadband dish; wherein the set top box (58) is a satellite broadband box; and wherein the control unit (70) transmits the environmental data over the coaxial connection using a protocol designed for communications in a satellite broadband system.

3. The system of claim 1, wherein the communications connection is a coaxial connection; wherein the receiver is a satellite TV dish; wherein the set top box is a satellite TV set top box; and wherein the control unit transmits the environmental data over the coaxial connection using a protocol designed for communications in a satellite TV system, wherein the protocol is preferably Digital Satellite Equipment Control ,DiSEqC.

4. The system of claim 1, wherein the communications connection (100) is a coaxial connection; wherein the receiver (52) is a satellite TV dish; wherein the set top box (58) is a satellite TV set top box; and wherein the control unit (70) transmits the environmental data over the coaxial connection (70) using a protocol designed for communications in a TV system; and wherein the protocol employs frequency shift keying, FSK.

5. The system (50) of any one of claims 1 to 4, wherein the set top box (58) processes the environmental data by converting the environmental data to environmental video data and generating a video signal including television video programming having the environmental video data at least partially superimposed thereupon and/ or processes the environmental data by storing the environmental data for determining trends.

6. The system (50) of any one of claims 1 to 5, wherein the set top box (58) is connected for Internet data communications; and wherein the set top box (58) processes the environmental data by transmitting the environmental data about the local environment in which the at least one environmental sensor is located over the Internet to a server (62).

7. The system (50) of anyone of claims 1 to 6, wherein the at least one environmental sensor is selected from the group consisting of a temperature sensor, a humidity sensor, an ultraviolet sensor, noise level sensor, precipitation sensor, seismic sensor, a wind sensor, a pressure sensor, and a pollution sensor; and/or
wherein the at least one environmental sensor (51 a, 51b) comprises a plurality of environmental sensors, with each of the plurality of environmental sensors comprising one of a temperature sensor, a humidity sensor, an ultraviolet sensor, noise level sensor, precipitation sensor, seismic sensor, a wind sensor, a pressure sensor, and a pollution sensor.

8. The system (50) of any one of claims 1 to 7, wherein the communications connection is a coaxial connection (100); wherein the receiver is a satellite TV dish (52); further comprising a low-noise block downconverter, LNB (54), configured to receive satellite TV video programming signals from the satellite TV dish, downconvert the received satellite TV video programming signals for use as television video programming signals, and send the television video programming signals to the set top box (58); wherein the LNB (54) is carried within a housing; and wherein the at least one environmental sensor (51a, 51b) is disposed within the housing.

9. The system (50) of any one of claims 1 to 8, wherein the LNB and the at least one environmental sensor are integrated on a same printed circuit board;
wherein the LNB and the at least one environmental sensor are integrated on different printed circuit boards;
wherein the LNB and the at least one environmental sensor are collocated in a single housing; and/or
wherein the at least one environmental sensor is mounted to a housing of the control unit.

10. The system (50) of any one of claims 1 to 9, further comprising a satellite TV dish (52) having at least one physical control associated therewith; and wherein the control unit (70) is configured to actuate the at least one physical control based upon the environmental data from the at least one environmental sensor (51a, 51b) or in response to a command received from the set top box (58).

11. The system (50) of claim 10, wherein the at least one physical control is a heater for the satellite TV dish (52).

12. The system (50) of any one of claims 1 to 11, wherein the set top box (58) processes the environmental data to determine at least one of an effective temperature, a dew point, and a wind chill factor.

13. The system (50) of any one of claims 1 to 12, wherein the at least one environmental sensor (51a, 51b) and/or an associated control circuit receives power via the communications connection.

14. The system (50) of any one of claims 1 to 13, wherein the control unit (70) comprises:
receiver circuitry configured to receive queries about or commands based upon the environmental data over the communications connection;
a microprocessor interfaced with the at least one environmental sensor and configured to gather and pre-process the environmental data;
a digital to analog converter configured to convert the pre-processed environmental data to modulated environmental data in a specified format, and to generate modulated environmental data encoded from the pre-processed digital environmental data in a specified format; and
a transmitter configured to transmit the modulated environmental data over the communications connection to the set top box.

15. A system, comprising:
a plurality of satellite systems (50a - 50e), each of the plurality of satellite systems comprising:
a coaxial connection (100),
an indoor box coupled to the coaxial connection,
a control unit (70) for a satellite dish coupled to the coaxial connection,
an environmental sensor (51 a, 51 b) configured to generate environmental data about a local environment in which the environmental sensor is located, and to send the environmental data to the control unit,
wherein the control unit (70) is configured to transmit the environmental data to the indoor box over the coaxial connection;
wherein at least one of the indoor box and the control unit is configured to process the environmental data and transmit the environmental data to a wide area network; and
a server (62) configured to:
receive the environmental data from each of the plurality of satellite systems (50a - 50e) over a wide area network;
generate weather data about a region as a function of the environmental data from each of the respective local environments in which the environmental sensors (51a- 51 e) of the plurality of satellite systems (50a - 50e) are located.
